# EUROPÄISCHE PATENTSCHRIFT

(11) **EP 2 238 374 B1**
(45) Veröffentlichungstag und Bekanntmachung des Hinweises auf die Patenterteilung: **10.08.2016**
(21) Anmeldenummer: 09705702.0
(22) Anmeldetag: 20.01.2009
(51) Int. Cl.: F16J 15/32

(54) **DICHTUNGSANORDNUNG MIT EINER BÜRSTENDICHTUNG UND VERFAHREN ZUR MONTAGE EINER BÜRSTENDICHTUNG**
BRUSH SEAL ASSEMBLY AND METHOD FOR MOUNTING A BRUSH SEAL
ASSEMBLAGE AVEC JOINT BROSSE ET PROCÉDÉ DE MONTAGE D'UN JOINT BROSSE

(30) Priorität: 29.01.2008 DE 102008006486
(43) Veröffentlichungstag der Anmeldung: 13.10.2010
(73) Patentinhaber: MTU Aero Engines AG, 80995 München (DE)
(72) Erfinder: BEICHL, Stefan, 82211 Herrsching (DE)
(86) Internationale Anmeldenummer: PCT/DE2009/000060
(87) Internationale Veröffentlichungsnummer: WO 2009/094982

(56) Entgegenhaltungen:
- EP-A- 1 146 266
- EP-A- 1 510 655
- WO-A-92/05378
- FR-A- 2 731 490
- US-A- 5 568 931
- US-A1- 2004 256 807

## Beschreibung

Die vorliegende Erfindung betrifft eine Dichtungsanordnung mit einem Gehäuse und einer Bürstendichtung mit einem Dichtelement umfassend eine Vielzahl von Fasern oder Drähten, die an einem Faser- oder Drahtende zu einem Faser- oder Drahtbündel verbunden sind, und einem klemmenartigen Dichtgehäuse zur Aufnahme und Fixierung des Faser- oder Drahtendes zwischen einem ersten und einem zweiten Schenkel und zur Fixierung der Bürstendichtung in einer Montageaussparung eines Gehäuses. Die Erfindung betrifft weiterhin ein Verfahren zur Montage einer Bürstendichtung.

Dichtungsanordnungen der eingangs genannten Art sind in einer großen Vielzahl bekannt und werden beispielsweise bei Gasturbinen eingesetzt, um den Zwischenraum zwischen einem Gehäuse und einem mit einer verhältnismäßig hohen Drehzahl rotierenden Rotor gegen Leckage abzudichten. Eine entsprechende Bürstendichtung einer solchen Dichtungsanordnung ist z. B. in der US 2007/0132189 A1 beschrieben. Nachteilig an den bekannten Bürstendichtungen ist jedoch, dass die für den jeweiligen Einsatzzweck geforderte Grundsteifigkeit der Bürstendichtung bereits vor dem Einbau der Bürstendichtung in die jeweilige Maschine mit entsprechenden Maßnahmen eingestellt werden muss. So werden bisher Bürstendichtungen mit einer fest fixierten freien Faserlänge gebaut. Unter freier Faserlänge wird dabei derjenige Abschnitt des Faser- oder Drahtbündels verstanden, der nicht von einem Klemmelement oder einem Schweiß- oder Klebebereich zur Fixierung und Bündelung der einzelnen Fasern und Drähte umgeben ist. So wurde z. B. bei dem Einsatz von Kevlar®-Bürstendichtungen in Werkzeugmaschinen-Dreheinführungen festgestellt, dass die geforderte Dichtigkeit nur mit sehr kurzen Faserlängen zu erreichen ist. Dabei wurde beobachtet, dass es zu einer unakzeptablen hohen Wärmeentwicklung kommen kann. Um diese Wärmeentwicklung zu begrenzen wird bei diesem genannten Beispiel die Bürstendichtung mit der Welle gepaart, um die notwendige Grundsteifigkeit der Bürstendichtung zu erreichen. Dieses Vorgehen ist unwirtschaftlich und logistisch kaum in den Griff zu bekommen.

Eine Dichtungsanordnung gemäß dem Oberbegriff von Anspruch 1 ist aus der EP 1 510 655 A1 bekannt. Der Vollständigkeit halber sei ferner noch auf die Druckschriften US 5,568,931 und WO 92/05378 verwiesen.

Es ist daher Aufgabe der vorliegenden Erfindung eine gattungsgemäße Dichtungsanordnung mit einer Bürstendichtung bereitzustellen, deren Grundsteifigkeit einstellbar ist.

Es ist weiterhin Aufgabe der vorliegenden Erfindung ein Verfahren zur Montage einer Bürstendichtung bereitzustellen, welches eine Einstellung und Anpassung der Grundsteifigkeit der Bürstendichtung an die individuellen Anforderungen der abzudichtenden Umgebung ermöglicht.

Gelöst werden diese Aufgaben durch eine Dichtungsanordnung gemäß den Merkmalen des Anspruchs 1 sowie ein Verfahren gemäß den Merkmalen des Anspruchs 10.

Vorteilhafte Ausgestaltungen der Erfindung sind in den jeweiligen Unteransprüchen beschrieben.

Eine Bürstendichtung einer erfindungsgemäßen Dichtungsanordnung weist ein Dichtelement umfassend eine Vielzahl von Fasern und Drähten auf, wobei die Fasern und Drähte an einem Faser- oder Drahtende zu einem Faser- oder Drahtbündel verbunden sind. Zudem weist das Dichtelement ein klemmenartiges Dichtgehäuse zur Aufnahme und Fixierung des Faser- oder Drahtendes zwischen einem ersten und einem zweiten Schenkel und zur Fixierung der Bürstendichtung in einer Montageaussparung eines Gehäuses auf. Das Dichtgehäuse ist dabei derart ausgebildet, dass der erste Schenkel kürzer als der zweite Schenkel ausgebildet ist, wobei der zweite Schenkel sich mit seiner Außenkontur gegen eine Innenseite der Montageaussparung abstützt und zumindest mit einem Teilbereich seiner Innenkontur im Bereich einer Austrittsöffnung für ein dem Faser- oder Drahtende gegenüberliegendes, aus dem Gehäuse herausragendes freies Ende des Faser- oder Drahtbündels an diesem anliegt und ein dem Teilbereich gegenüberliegender Bereich des freien Endes des Faser- oder Drahtbündels zumindest teilweise an der Austrittsöffnung anliegt. Zudem ist der erste Schenkel gegen eine Innenseite der Montageaussparung abgestützt. Bei der Bürstendichtung der erfindungsgemäßen Dichtungsanordnung wird erst nach bzw. mit der Montage der Bürstendichtung in das Gehäuse die Grundsteifigkeit des Faser- oder Drahtbündels bzw. der Dichtung eingestellt. Dabei werden die Fasern oder Drähte zwischen den zweiten Schenkel des Dichtgehäuses und der Austrittsöffnung der Montageaussparung geklemmt. Die Länge des zweiten Schenkels des Dichtgehäuses kann variiert werden, so dass die freie Faserlänge und damit die Grundsteifigkeit der Bürstendichtung individuell an die Anforderungen der abzudichtenden Umgebung angepasst werden kann. Zudem kann die Bürstendichtung mit normalen Fertigungstoleranzen gefertigt werden, da die gegebenenfalls sehr hohe Grundsteifigkeit der Bürstendichtung erst nach der Montage der Bürstendichtung erzielt wird. So kann beispielsweise im Betrieb sowohl die Dichtigkeit wie auch die Wärmeentwicklung eingestellt werden, ohne dass die Bürstendichtung mit einer Welle gepaart werden muss. Hierdurch verringern sich die Kosten für die Herstellung wie auch für die Montage sowie der logistische Aufwand deutlich. So kann die Bürstendichtung mit langen Fasern, die eine geringe Grundsteifigkeit aufweisen, gefertigt werden. Bei der Montage der Bürstendichtung werden die Fasern bzw. Drähte durch das Dichtgehäuse und die Austrittsöffnung der Montageaussparung in einem vorbestimmten Bereich geklemmt, so dass die geklemmten Fasern bzw. Drähte entsprechend einer Bürstendichtung mit kürzeren Fasern arbeiten.

In einer vorteilhaften Ausgestaltung der erfindungsgemäßen Dichtungsanordnung ist das Faser- oder Drahtende aus einem Kerndraht, um den die Vielzahl von Fasern oder Drähten gewickelt ist und einem Klemmelement, insbesondere einem Klemmrohr, gefertigt, wobei das Klemmelement zur Fixierung und Bündelung der Fasern und Drähte dient. Es ist aber auch möglich, dass das Faser- oder Drahtende einen Schweiß- oder Klebebereich zur Fixierung und Bündelung der Fasern und Drähte aufweist. Erfindungsgemäß können unterschiedliche Arten von Dichtelementen verwendet werden.

In weiteren vorteilhaften Ausgestaltungen der erfindungsgemäßen Dichtungsanordnung ist das Dichtgehäuse einstückig ausgebildet oder der erste und zweite Schenkel des Dichtgehäuses sind separat ausgebildete Bauelemente. Dabei kann das Dichtgehäuse aus Metall, einer Metall-Legierung, aus Kunststoff oder Keramik bestehen. Vorteilhafterweise kann das Dichtgehäuse an die jeweiligen Anforderungen der abzudichtenden Maschinenbereiche angepasst werden.

In weiteren vorteilhaften Ausgestaltungen der erfindungsgemäßen Dichtungsanordnung ist der zweite Schenkel des Dichtgehäuses derart ausgebildet, dass er aus der Austrittsöffnung der Montageaussparung herausragt. Dadurch können vorteilhafterweise sehr hohe Grundsteifigkeiten der Bürstendichtung erzielt werden. Des Weiteren kann der Teilbereich mit dem der zweite Schenkel an dem Faser- oder Drahtbündel der Bürstendichtung anliegt von dem freien Ende des Faser- oder Drahtbündels beabstandet ausgebildet sein. Hierdurch wird vorteilhafterweise ein unerwünschter Kontakt zwischen dem Dichtgehäuse bzw. dem zweiten Schenkel und gegenüberliegenden Maschinenteilen vermieden.

Gemäß weiteren vorteilhaften Ausgestaltungen der erfindungsgemäßen Dichtungsanordnung kann das Gehäuse, in das die Bürstendichtung eingebaut wird ein Bauelement einer Flug- oder stationären Gasturbine, eines Verdichters, einer Dampfturbine oder einer Werkzeugmaschine sein. Grundsätzlich kann die Bürstendichtung in allen Maschinen, bei denen ein Spalt zwischen zwei Bauelementen der Maschine abgedichtet werden muss eingesetzt werden.

Ein erfindungsgemäßes Verfahren zur Montage einer Bürstendichtung in einem Gehäuse umfasst folgende Schritte: a) Bereitstellung einer Bürstendichtung mit einem Dichtelement umfassend eine Vielzahl von Fasern oder Drähten, die an einem Faser- oder Drahtende zu einem Faser- oder Drahtbündel verbunden sind und einem klemmenartigen Dichtgehäuse zur Aufnahme und Fixierung des Faser- oder Drahtendes zwischen einem ersten und einem zweiten Schenkel, wobei das Dichtgehäuse derart ausgebildet ist, dass der erste Schenkel kürzer als der zweite Schenkel ausgebildet ist und b) Einführen und Fixieren der Bürstendichtung in einer Montageaussparung des Gehäuses, wobei der zweite Schenkel sich mit seiner Außenkontur gegen eine Innenseite der Montageaussparung abstützt und zumindest mit einem Teilbereich seiner Innenkontur im Bereich einer Austrittsöffnung für ein dem Faser- oder Drahtende gegenüberliegendes, aus dem Gehäuse herausragendes freies Ende des Faser- oder Drahtbündels an diesem anliegt und ein dem Teilbereich gegenüberliegender Bereich des freien Endes des Faser- oder Drahtbündels zumindest teilweise an der Austrittsöffnung anliegt und der erste Schenkel gegen eine Innenseite der Montageaussparung abgestützt ist. Bei dem erfindungsgemäßen Verfahren wird erst nach bzw. während der Montage der Bürstendichtung in das Gehäuse die Grundsteifigkeit des Faser- oder Drahtbündels bzw. der Dichtung eingestellt. Dabei werden die Fasern oder Drähte zwischen den zweiten Schenkel des Dichtgehäuses und der Austrittsöffnung der Montageaussparung geklemmt. Die Länge des zweiten Schenkels des Dichtgehäuses kann variiert werden, so dass die freie Faserlänge und damit die Grundsteifigkeit der Bürstendichtung individuell an die Anforderungen der abzudichtenden Umgebung angepasst werden kann.

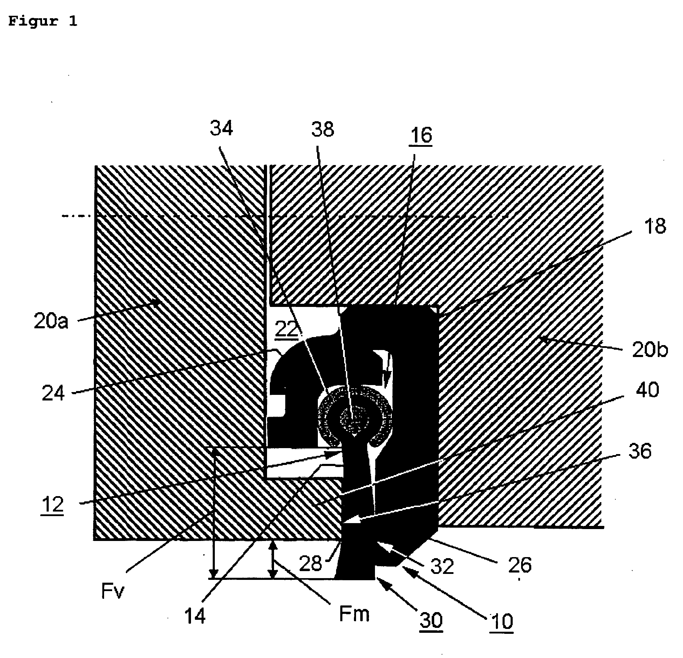

Weitere Vorteile, Merkmale und Einzelheiten der Erfindung ergeben sich aus der nachfolgenden Beschreibung eines zeichnerisch dargestellten Ausführungsbeispiels. Dabei zeigt die Figur eine schematische Schnittdarstellung einer Bürstendichtung 10 als Teil einer erfindungsgemäßen Dichtungsanordnung.

Die Bürstendichtung 10 besteht aus einem Dichtelement 12, wobei das Dichtelement 12 eine Vielzahl von Fasern oder Drähten umfasst, die an einem Faser- oder Drahtende 16 zu einem Faser- oder Drahtbündel 14 verbunden sind. Des Weiteren weist das Dichtelement 12 ein klemmenartiges Dichtgehäuse 18 zur Aufnahme und Fixierung des Faser- oder Drahtendes 16 zwischen einem ersten und einem zweiten Schenkel 24, 26 auf. Das Dichtgehäuse 18 dient des Weiteren zur Fixierung der Bürstendichtung 10 in einer Montageaussparung 22 eines zweiteilig ausgestalteten Gehäuses 20a, 20b. Die Fasern oder Drähte bestehen dabei aus Metall, einer Metall-Legierung, Kunststoff oder Keramik.

Des Weiteren erkennt man, dass das Dichtgehäuse 18 derart ausgebildet ist, dass der erste Schenkel 24 kürzer als der zweite Schenkel 26 ist, wobei der zweite Schenkel 26 sich mit seiner Außenkontur zumindest teilweise gegen eine Innenseite der Montageaussparung 22 abstützt. Mit einem Teilbereich 32 seiner Innenkontur liegt der zweite Schenkel 26 im Bereich einer Austrittsöffnung 28 der Montageaussparung 22 an dem Faser- oder Drahtbündel 14 an. Die Austrittsöffnung 28 dient dabei für den Austritt eines dem Faser- oder Drahtendes 16 gegenüberliegenden, aus dem Gehäuse 20a, 20b herausragenden freien Ende 30 des Faser- oder Drahtbündels 14. Ein dem Teilbereich 32 gegenüberliegender Bereich 36 des freien Endes 30 des Faser- oder Drahtbündels 14 liegt dagegen an der Austrittsöffnung 28 an. Dadurch entsteht zwischen dem Teilbereich 32 des zweiten Schenkels 26 und dem Bereich 36 der Austrittsöffnung 28 eine Klemmwirkung, die zu einer Verkürzung der freien Faserlänge des Faser- oder Drahtbündels 14 führt. Durch die Veränderung der freien Faserlänge verändert sich die Grundsteifigkeit, in dem vorliegenden Ausführungsbeispiel erhöht sich durch die Verkürzung der freien Faserlänge die Grundsteifigkeit der Bürstendichtung 10. Dabei wird deutlich, dass die Bürstendichtung 10 vor der Montage in das Gehäuse 20a, 20b eine freie Faserlänge Fv aufweist, die größer ist als die freie Faserlänge Fm nach der Bürstendichtungsmontage. Zur Erzielung der Klemmwirkung wird das Dichtgehäuse 18 mit dem fixierten Dichtelement 12 in die Montageaussparung 22 des Gehäuseteils 20b eingelegt. Anschließend wird das zweite Gehäuseteil 20a mit dem ersten Gehäuseteil 20b verbunden, wobei ein Vorsprung 40 des zweiten Gehäuseteils 20a gegen den Bereich 36 des freien Endes 30 des Faser- oder Drahtbündels 14 drückt.

Des Weiteren erkennt man, dass das Faser- oder Drahtende 16 aus einem Kerndraht 38, um den eine Vielzahl von Fasern oder Drähte gewickelt ist und einem Klemmelement 34 besteht, wobei das Klemmelement 34 zur Fixierung und Bündelung der Fasern und Drähte dient. In dem dargestellten Ausführungsbeispiel ist das Klemmelement 34 als Klemmrohr ausgebildet. Das Dichtgehäuse 18 ist in dem dargestellten Ausführungsbeispiel einstückig ausgebildet. Es ist aber auch möglich, dass der erste und zweite Schenkel 24, 26 des Dichtgehäuses 18 separat ausgebildete Bauelemente sind. Das Dichtgehäuse 18 kann aus Metall, einer Metall-Legierung, aus Kunststoff oder Keramik bestehen.

In dem dargestellten Ausführungsbeispiel ist der zweite Schenkel 26 des Dichtgehäuses 18 derart ausgebildet, dass er aus der Austrittsöffnung 28 herausragt. Es ist aber auch möglich, dass der zweite Schenkel 26 mit der Austrittsöffnung 28 bündig abschließt. Des Weiteren erkennt man, dass der Teilbereich 32 des zweiten Schenkels 26 von dem freien Ende 30 des Faser- oder Drahtbündels 14 beabstandet ausgebildet ist.

## Patentansprüche

1. Dichtungsanordnung mit einem Gehäuse (20a, 20b) und einer Bürstendichtung mit einem Dichtelement (12) umfassend eine Vielzahl von Fasern oder Drähten, die an einem Faser- oder Drahtende (16) zu einem Faser- oder Drahtbündel (14) verbunden sind, und einem klemmenartigen Dichtgehäuse (18) zur Aufnahme und Fixierung des Faser- oder Drahtendes (16) zwischen einem ersten und einem zweiten Schenkel (24, 26) und zur Fixierung der Bürstendichtung (10) in einer Montageaussparung (22) des Gehäuses (20a, 20b), wobei das Dichtgehäuse (18) derart ausgebildet ist, dass der erste Schenkel (24) kürzer als der zweite Schenkel (26) ausgebildet ist, wobei der zweite Schenkel (26) sich mit seiner Außenkontur gegen eine Innenseite der Montageaussparung (22) abstützt und zumindest mit einem Teilbereich (32) seiner Innenkontur im Bereich einer Austrittsöffnung (28) der Montageaussparung (22) des Gehäuses (20a, 20b) für ein dem Faser- oder Drahtende (16) gegenüberliegendes, aus dem Gehäuse (20a, 20b) herausragendes freies Ende (30) des Faser- oder Drahtbündels (14) an diesem anliegt und der erste Schenkel (24) gegen eine Innenseite der Montageaussparung (22) abgestützt ist, **dadurch gekennzeichnet, dass** ein dem Teilbereich (32) gegenüberliegender Bereich (36) des freien Endes (30) des Faser- oder Drahtbündels (14) zumindest teilweise an der Austrittsöffnung (28) der Montageaussparung (22) des Gehäuses (20a, 20b) anliegt, wobei die Fasern oder Drähte zwischen dem zweiten Schenkel (26) des Dichtgehäuses (18) und der Austrittsöffnung (28) der Montageaussparung (22) des Gehäuses (20a, 20b) geklemmt werden.

2. Dichtungsanordnung nach Anspruch 1, **dadurch gekennzeichnet, dass** das Faser- oder Drahtende (16) aus einem Kerndraht (38), um den die Vielzahl von Fasern oder Drähten gewickelt ist und einem Klemmelement (34), insbesondere einem Klemmrohr, besteht, wobei das Klemmelement (34) zur Fixierung und Bündelung der Fasern und Drähte dient.

3. Dichtungsanordnung nach Anspruch 1, **dadurch gekennzeichnet, dass** das Faser- oder Drahtende (16) einen Schweiß- oder Klebebereich zur Fixierung und Bündelung der Fasern und Drähte aufweist.

4. Dichtungsanordnung nach einem der vorhergehenden Ansprüche, **dadurch gekennzeichnet, dass** das Dichtgehäuse (18) einstückig ausgebildet ist.

5. Dichtungsanordnung nach einem der Ansprüche 1 bis 3, **dadurch gekennzeichnet, dass** der erste und zweite Schenkel (24, 26) des Dichtgehäuses (18) separat ausgebildete Bauelemente sind.

6. Dichtungsanordnung nach einem der vorhergehenden Ansprüche, **dadurch gekennzeichnet, dass** das Dichtgehäuse (18) aus Metall, einer Metall-Legierung, aus Kunststoff oder Keramik besteht.

7. Dichtungsanordnung nach einem der vorhergehenden Ansprüche, **dadurch gekennzeichnet, dass** der zweite Schenkel (26) derart ausgebildet ist, dass er aus der Austrittsöffnung (28) herausragt.

8. Dichtungsanordnung nach einem der vorhergehenden Ansprüche, **dadurch gekennzeichnet, dass** der Teilbereich (32) von dem freien Ende (30) des Faser- oder Drahtbündels (14) beabstandet ausgebildet ist.

9. Dichtungsanordnung nach einem der vorhergehenden Ansprüche , **dadurch gekennzeichnet, dass** Gehäuse (20a, 20b) ein Bauelement einer flug- oder stationären Gasturbine, eines Verdichters, einer Dampfturbine oder einer Werkzeugmaschine ist.

10. Verfahren zur Montage einer Bürstendichtung (10) in einem Gehäuse (20a, 20b), **dadurch gekennzeichnet, dass** das Verfahren folgende Schritte umfasst:
a) Bereitstellung einer Bürstendichtung (10) mit einem Dichtelement (12) umfassend eine Vielzahl von Fasern oder Drähten, die an einem Faser- oder Drahtende (16) zu einem Faser- oder Drahtbündel (14) verbunden sind und einem klemmenartigen Dichtgehäuse (18) zur Aufnahme und Fixierung des Faser- oder Drahtendes (16) zwischen einem ersten und einem zweiten Schenkel (24, 26), wobei das Dichtgehäuse (18) derart ausgebildet ist, dass der erste Schenkel (24) kürzer als der zweite Schenkel (26) ausgebildet ist; und
b) Einführen und Fixieren der Bürstendichtung (10) in einer Montageaussparung (22) des Gehäuses (20a, 20b), wobei der zweite Schenkel (26) sich mit seiner Außenkontur gegen eine Innenseite der Montageaussparung (22) abstützt und zumindest mit einem Teilbereich (32) seiner Innenkontur im Bereich einer Austrittsöffnung (28) der Montageaussparung (22) des Gehäuses (20a, 20b) für ein dem Faser- oder Drahtende (16) gegenüberliegendes, aus dem Gehäuse (20a, 20b) herausragendes freies Ende (30) des Faser- oder Drahtbündels (14) an diesem anliegt und ein dem Teilbereich (32) gegenüberliegender Bereich (36) des freien Endes (30) des Faser- oder Drahtbündels (14) zumindest teilweise an der Austrittsöffnung (28) der Montageaussparung (22) des Gehäuses (20a, 20b) anliegt, wobei die Fasern oder Drähte zwischen dem zweiten Schenkel (26) des Dichtgehäuses (18) und der Austrittsöffnung (28) der Montageaussparung (22) des Gehäuses (20a, 20b) geklemmt werden, und der erste Schenkel (24) gegen eine Innenseite der Montageaussparung (22) abgestützt ist.

## Claims

1. A sealing assembly with a housing (20a, 20b) and a brush seal with a seal element (12) comprising a plurality of fibres or wires which are joined at one fibre or wire end (16) into a fibre or wire bundle (14), and a clamp-like seal housing (18) for receiving and fixing the fibre or wire end (16) between a first and a second shank (24, 26) and for fixing the brush seal (10) in an assembly recess (22) in the housing (20a, 20b), wherein the seal housing (18) is designed such that the first shank (24) is shorter than the second shank (26), wherein the exterior contour of the second shank (26) rests against the inside of the assembly recess (22) and with at least one section (32) of its interior contour in the area of an outlet opening (28) in the assembly recess (22) in the housing (20a, 20b) for a free end (30) of the fibre or wire bundle (14) protruding from the housing (20a, 20b) opposite the fibre or wire end (16) lying flat against it and the first shank (24) is resting against the inside of the assembly recess (22), **characterised in that** the free end (30) of the fibre of wire bundle (14) in an area (36) opposite the section (32) lies at least partially in the outlet opening (28) in the assembly recess (22) in the housing (20a, 20b), wherein the fibres or wires are clamped between the second shank (26) of the seal housing (18) and the outlet opening (28) in the assembly recess (22) in the housing (20a, 20b).

2. The sealing assembly according to claim 1, **characterised in that** the fibre or wire end (16) is wound from a centre wire (38) around the plurality of fibres or wires and there is a clamping element (34), in particular a clamping tube, wherein the clamping element (34) is used for the fixing and bundling of the fibres and wires.

3. The sealing assembly according to claim 1, **characterised in that** the fibre or wire end (16) has a weld or adhesive area for the fixing and bundling of the fibres and wires.

4. The sealing assembly according to any of the preceding claims, **characterised in that** the seal housing (18) is designed as one piece.

5. The sealing assembly according to any of claims 1 to 3, **characterised in that** the first and second shanks (24, 26) in the seal housing (18) are separately designed components.

6. The sealing assembly according to any of the preceding claims, **characterised in that** the seal housing (18) is made from metal, a metal alloy, plastic or ceramic.

7. The sealing assembly according to any of the preceding claims, **characterised in that** the second shank (26) is designed such that it protrudes through the outlet opening (28).

8. The sealing assembly according to any of the preceding claims, **characterised in that** the section (32) is designed with a gap to the free end (30) of the fibre or wire bundle (14).

9. The sealing assembly according to any of the preceding claims, **characterised in that** the housing (20a, 20b) is a component in an aero or land-based gas turbine, a compressor a steam turbine or a machine tool.

10. A procedure for the installation of a brush seal (10) in a housing (20a, 20b), **characterised in that** the procedure includes the following steps:
a) The provision of a brush seal (10) with a sealing element (12) comprising a plurality of fibres or wires which are joined at one fibre or wire end (16) into a fibre or wire bundle (14) and a clamp-like seal housing (18) for receiving and fixing the fibre or wire end (16) between a first and a second shank (24, 26), wherein the seal housing (18) is designed such that the first shank (24) is shorter than the second shank (26); and
b) The insertion and fixing of the brush seal (10) into an assembly recess (22) in the housing (20a, 20b), wherein the exterior contour of the second shank (26) rests against the inside of the assembly recess (22) and with at least one section (32) of its interior contour in the area of an outlet opening (28) in the assembly recess (22) in the housing (20a, 20b) for a free end (30) of the fibre or wire bundle (14) protruding from the housing (20a, 20b) opposite the fibre or wire end (16) lying flat against it and the free end (30) of the fibre of wire bundle (14) in an area (36) opposite the section (32) lies at least partially in the outlet opening (28) in the assembly recess (22) in the housing (20a, 20b), wherein the fibres or wires are clamped between the second shank (26) of the seal housing (18) and the outlet opening (28) in the assembly recess (22) in the housing (20a, 20b), and the first shank (24) is resting against the inside of the assembly recess (22).

## Revendications

1. Dispositif d'étanchéité comprenant un boîtier (20a, 20b) et une garniture d'étanchéité à brosse pourvue d'un élément d'étanchéité (12) comprenant une pluralité de fibres ou de fils qui sont reliés à une extrémité de fibre ou de fil (16) pour former un faisceaux de fibres ou de fils (14) et un boîtier d'étanchéité (18) en forme de pince destiné à recevoir et fixer l'extrémité de fibre ou de fil (16) entre des première et seconde branches (24, 26) et à fixer la garniture d'étanchéité à brosse (10) dans un évidement de montage (22) du boîtier (20a, 20b), le boîtier d'étanchéité (18) étant conformé de telle sorte que la première branche (24) est plus courte que la seconde branche (26), la seconde branche (26) s'appuyant au niveau de son contour extérieur contre un côté intérieur de l'évidement de montage (22) et étant en appui, au niveau d'au moins une zone (32) de son contour intérieur, sur le faisceau de fils ou de fibres dans la région d'une ouverture de sortie (28) de l'évidement de montage (22) du boîtier (20a, 20b) destiné à une extrémité libre (30), opposée à l'extrémité de fibre ou de fil (16) et saillant du boîtier (20a, 20b), du faisceau de fibres ou de fils (14) et la première branche (24) s'appuyant contre un côté intérieur de l'évidement de montage (22), **caractérisé en ce que** la région (36), opposée la zone (32), de l'extrémité libre (30) du faisceau de fibres ou de fils (14) est appui au moins partiellement sur l'ouverture de sortie (28) de l'évidement de montage (22) du boîtier (20a, 20b), les fibres ou les fils étant serrées entre la seconde branche (26) du boîtier d'étanchéité (18) et l'ouverture de sortie (28) de l'évidement de montage (22) du boîtier (20a, 20b).

2. Dispositif d'étanchéité selon la revendication 1, **caractérisé en ce que** l'extrémité de fibre ou de fil (16) est constituée d'un fil central (38), autour duquel la pluralité de fibres ou de fils est enroulé, et d'un élément de serrage (34), en particulier d'un tube de serrage, l'élément de serrage (34) servant à fixer et regrouper les fibres et les fils.

3. Dispositif d'étanchéité selon la revendication 1, **caractérisé en ce que** l'extrémité de fibre ou de fil (16) comporte une zone de soudure ou de collage destinée à la fixation et au regroupement des fibres et des fils.

4. Dispositif d'étanchéité selon l'une des revendications précédentes, **caractérisé en ce que** le boîtier d'étanchéité (18) est formé d'une seule pièce.

5. Dispositif d'étanchéité selon l'une des revendications 1 à 3, **caractérisé en ce que** les première et seconde branches (24, 26) du boîtier d'étanchéité (18) sont des composants formés séparément.

6. Dispositif d'étanchéité selon l'une des revendications précédentes, **caractérisé en ce que** le boîtier d'étanchéité (18) est en métal, en alliage métallique, en matière plastique ou en céramique.

7. Dispositif d'étanchéité selon l'une des revendications précédentes, **caractérisé en ce que** la seconde branche (26) est formée de façon à faire saillie de l'ouverture de sortie (28).

8. Dispositif d'étanchéité selon l'une des revendications précédentes, **caractérisé en ce que** la zone (32) est formée à distance de l'extrémité libre (30) du faisceau de fibres ou de fils (14).

9. Dispositif d'étanchéité selon l'une des revendications précédentes, **caractérisé en ce que** le boîtier (20a, 20b) est un composant d'une turbine à gaz d'aéronefs ou immobile, d'un compresseur, d'une turbine à vapeur ou d'une machine-outil.

10. Procédé de montage d'une garniture d'étanchéité à brosse (10) située dans un boîtier (20a, 20b), **caractérisé en ce que** le procédé comprend les étapes consistant à :
a) produire une garniture d'étanchéité à brosse (10) pourvue d'un élément d'étanchéité (12) comprenant une pluralité de fibres ou de fils qui sont reliées à une extrémité de fibre ou de fil (16) pour former un faisceau de fibres ou de fils (14) et un boîtier d'étanchéité (18) en forme de pince destiné à recevoir et fixer l'extrémité de fibre ou de fil (16) entre des première et seconde branches (24, 26), le boîtier d'étanchéité (18) est conformé de telle sorte que la première branche (24) est plus courte que la seconde branche (26) ; et
b) introduire et fixer la garniture d'étanchéité à brosse (10) dans un évidement de montage (22) du boîtier (20a, 20b), la seconde branche (26) s'appuyant au niveau de son contour extérieur contre un côté intérieur de l'évidement de montage (22) et étant en appui, au niveau d'au moins une zone (32) de son contour intérieur, sur le faisceau de fils ou de fibres dans la région d'une ouverture de sortie (28) de l'évidement de montage (22) du boîtier (20a, 20b) destiné à une extrémité libre (30), opposée à l'extrémité de fibre ou fil (16), et saillant du boîtier (20a, 20b), du faisceau de fibres ou de fils (14) et une région (36), opposée à la zone (32), de l'extrémité libre (30) du faisceau de fibres ou de fils (14) étant en appui au moins partiellement sur l'ouverture de sortie (28) de l'évidement de montage (22) du boîtier (20a, 20b), les fibres ou les fils étant serrées entre la seconde branche (26) du boîtier d'étanchéité (18) et l'ouverture de sortie (28) de l'évidement de montage (22) du boîtier (20a, 20b), et la première branche (24) s'appuyant contre un côté intérieur de l'évidement de montage (22).
